# EUROPEAN PATENT SPECIFICATION

(11) **EP 4 242 113 B1**
(45) Date of publication and mention of the grant of the patent: **11.02.2026**
(21) Application number: 23156616.7
(22) Date of filing: 14.02.2023
(51) Int. Cl.: B64D 37/32

(54) **OVER-PRESSURE VENT SYSTEM FOR AN AIRCRAFT FUEL TANK**
ÜBERDRUCKENTLÜFTUNGSSYSTEM FÜR EINEN FLUGZEUGKRAFTSTOFFTANK
SYSTÈME D'ÉVENT DE SURPRESSION POUR RÉSERVOIR DE CARBURANT D'AÉRONEF

(30) Priority: 09.03.2022 US 202217691080
(43) Date of publication of application: 13.09.2023
(73) Proprietor: The Boeing Company, Arlington, VA 22202 (US)
(72) Inventor: JOJIC, Ivana, Arlington, 22202 (US); JOHNSON, Timothy Andrew, Arlington, 22202 (US); JOHNSON, Andrew T., Arlington, 22202 (US); RYAN, David A., Arlington, 22202 (US); PILLA, Melissa A., Arlington, 22202 (US); GIRI, Bipin, Arlington, 22202 (US); ADKINS II, David Allen, Arlington, 22202 (US)
(74) Representative: Carrie, Rosemary Louise Hunter

(56) References cited:
- US-A- 3 467 349
- US-A- 3 587 618
- US-A1- 2014 345 700
- US-A1- 2015 151 846
- US-A1- 2017 283 083
- US-A1- 2020 307 820

## Description

### BACKGROUND

It is known to supply an inerting gas, such as nitrogen-enriched air (NEA), to the ullages (i.e., the portion of a tank above the liquid) of an aircraft fuel tank to prevent the tank from combusting. However, failures in the Nitrogen Generation System (NGS), the Nitrogen Enriched Air Distribution System (NEADS), the fuel system (e.g., sensed through the NEADS transport elements), and/or other systems can over-pressurize the fuel tank. Over-pressurization of an aircraft fuel tank in flight can lead to loss of structural integrity and is considered a potentially catastrophic hazard.

US 2014/0345700 A1, in accordance with its abstract, states a pressure monitoring system for a fuel tank includes a supply line fluidly coupling a fluid source with at least one fuel tank for supplying an inert gas to the at least one fuel tank. Also included is a pressure relief valve in communication with the supply line configured to detect a pressure differential between a supply line pressure and an ambient pressure. Further included is a pressure sensor configured to detect the supply line pressure. Yet further included is a controller in operable communication with the pressure sensor and the fluid source, wherein the controller is configured to modify a flow rate of the inert gas in the supply line upon detection of the supply line pressure exceeding a predetermined pressure limit.

US 3 467 349 A, in accordance with its abstract, states a system for purging aircraft fuel tanks with an inert gas. In the system, an inert gas, such as nitrogen gas, is automatically introduced into a fuel tank in accordance with a very slight pressure differential between the interior and exterior of the tank in unpressurized systems, and between the tank and a pressure on the regulator in pressurized systems. The system utilizes a demand regulator to control automatic intromission of nitrogen gas from a storage container to the fuel tank which is being treated. The system also provides for a regulation of the amount of inert gas within the fuel tank in accordance with changing pressures, temperatures, and quantities of fuel within the tank. The controls provided by the system permit a purging of fuel storage and supply equipment for aircraft, such as supersonic transport craft, which normally operated within a broad range of temperatures and ambient pressures.

US 3 587 618 A, in accordance with its abstract, states a fire and explosion prevention system for aircraft fuel tanks that utilizes an inert gas for pressurizing the fuel tanks and in which means is provided for preventing over-pressurization of the fuel tanks in case of either clogging of vent passages that normally connect the fuel tanks to atmosphere or failure of vent valves to open.

### SUMMARY

According to a first aspect, there is provided a nitrogen enriched air distribution system (NEADS) as defined in claim 1. According to a second aspect, there is provided a method of venting pressure from a NEADS as defined in claim 10.

### BRIEF DESCRIPTION OF THE DRAWINGS

Figure 1 is a schematic diagram of a nitrogen enriched air distribution system (NEADS) for a fuel tank of an aircraft illustrating an over-pressure vent (OPV) system according to an implementation.
Figure 2 is a schematic diagram illustrating an OPV valve of the OPV system shown in Figure 1 according to an implementation.
Figure 3 is a schematic diagram illustrating an OPV valve according to another implementation.
Figure 4 is a schematic diagram illustrating an OPV valve according to another implementation.
Figure 5 is a schematic diagram illustrating an OPV system according to another implementation.
Figure 6 is a schematic diagram illustrating an OPV system according to another implementation.
Figure 7 is a perspective view of a surge tank of an aircraft illustrating an OPV valve of the OPV system shown in Figure 6 according to an implementation.
Figure 8 is a flow chart illustrating a method of venting pressure from a NEADS of a fuel tank according to an implementation.
Figure 9 is a schematic view of an implementation of an aircraft.

### DETAILED DESCRIPTION

The foregoing summary, as well as the following detailed description of certain implementations will be better understood when read in conjunction with the appended drawings. While various spatial and directional terms, such as "top," "bottom," "upper," "lower," "vertical," and the like are used to describe implementations of the present application, it is understood that such terms are merely used with respect to the orientations shown in the drawings. The orientations can be inverted, rotated, or otherwise changed, such that a top side becomes a bottom side if the structure is flipped 180°, becomes a left side or a right side if the structure is pivoted 90°, and the like.

Aircraft fuel tank vent systems are designed to facilitate equalizing the pressure in wing fuel tanks. In some aircraft, the wing fuel tanks are further distinguished between the main wing fuel tanks, which are located fully in the wings of the airplane, and the center wing tank, which is between the main fuel tanks, and is partially contained within the fuselage. During the climb phase, as the aircraft's altitude increases, atmospheric pressure decreases and the air above fuel within the tank is directed through the vent system into the surge tanks, which are located in each wing outboard of the main fuel tanks, and vented overboard (e.g., through a vent scoop, etc.).

During flight of an aircraft, operational conditions (e.g., maneuvers, etc.) and/or failures (e.g., failures in the Nitrogen Generation System (NGS), the Nitrogen Enriched Air Distribution System (NEADS), the fuel system, other systems, etc.) can cause over-pressurization of the fuel tank(s) of the aircraft. Over-pressurization of an aircraft fuel tank in flight can lead to loss of structural integrity and is considered a potentially catastrophic hazard.

Pressure relief valves, which are located in surge tanks outboard of the main fuel tank end rib, open when the allowable difference between surge tank pressure and atmospheric pressure is exceeded. However, such pressure relief valves would not relieve in scenarios where the venting is inhibited between the main and surge tanks (e.g., vent climb port covered and float valve/dive port failed and/or covered, such as in dual vent transition where the venting of the main tanks transitions from the float valves to the climb ports due to outboard fuel movement during takeoff/climb or in negative "g" scenarios where all vents are momentarily covered in fuel, etc.).

Overpressure conditions exist for both the center and main fuel tanks, but because the main fuel tanks are typically smaller in volume and less inerting air is distributed to them in normal conditions, there are more conditions where the improper distribution of nitrogen enriched air (NEA) could lead to overpressure of the main fuel tanks.

Certain implementations provide an over-pressure vent (OPV) system for a fuel tank of an aircraft. The OPV system includes an OPV valve configured to be coupled in fluid communication with a supply line of a nitrogen enriched air distribution system (NEADS) such that the OPV valve is configured to vent pressure from the supply line. The OPV valve is configured to be coupled in fluid communication with the supply line upstream from an outlet of the supply line from which the NEADS delivers nitrogen enriched gas to the fuel tank. The OPV valve is configured to sense a pressure within the supply line upstream from the outlet of the supply line.

Certain implementations provide OPV systems that operate in an unconventional manner to sense an over-pressurization of a fuel tank and divert nitrogen-enriched gas flow overboard via an OPV valve. Certain implementations provide savings in fuel tank over-pressure analysis non-recuring costs, reduce certification risks compared to architectures that limit inerting air into the fuel tank based on failure conditions and/or vent architectures that increase design space where limitations are needed (e.g., flights with covered main and/or center tank climb ports, etc.), and reduce confined space work and software complexity compared to systems that use in-tank components.

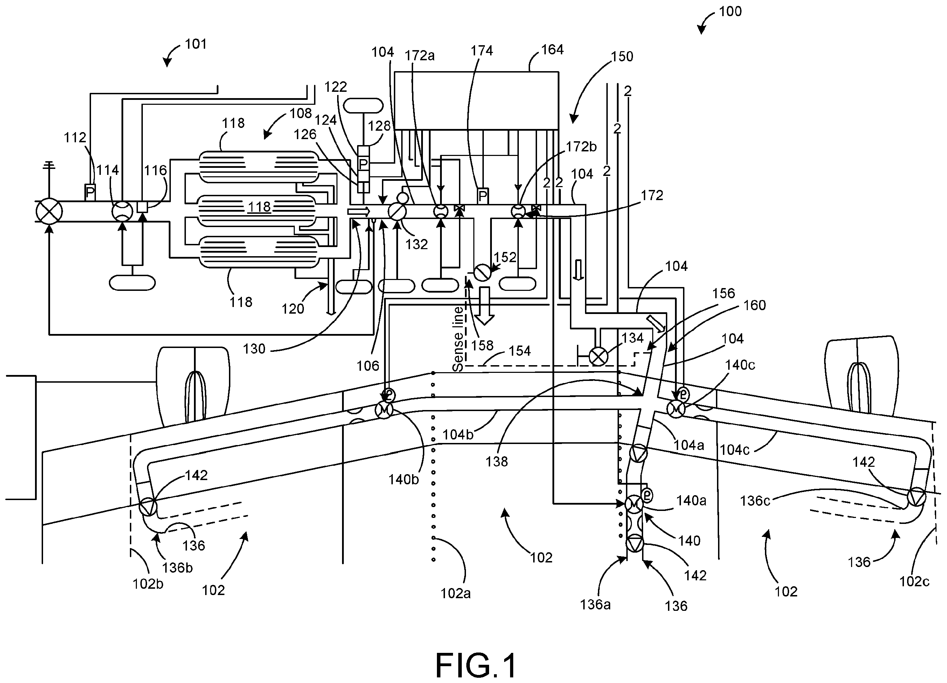

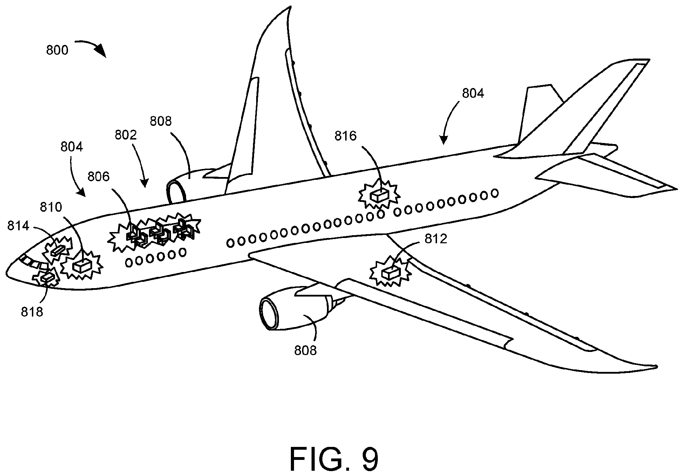

With references now to the figures, a schematic view of a NEADS 100 for a fuel tank 102 of an aircraft (e.g., the aircraft 800 shown in Figure 9, etc.) is provided in Figure 1. The NEADS 100 includes a supply line 104 that has an inlet 106. An NGS 101 of the aircraft includes a gas separation module (GSM) assembly 108 coupled in fluid communication with a gas source (not shown; e.g., ambient air, gas supplied from a heat exchanger, gas supplied from a compressor, etc.) for receiving a flow of gas (e.g., air) having a nitrogen component and an oxygen component. In some implementations, a system shut-off valve (not shown) is operatively connected between the GSM assembly 108 and the gas source for selectively controlling operation of the NGS 101, the NEADS 100, and/or the like (e.g., for selectively allowing gas to flow through the inlet 106 and into the supply line 104 of the NEADS 100, etc.).

In some implementations, a pressure sensor 112, a flow rate sensor 114, and/or a temperature sensor 116 is operatively connected upstream from the GSM assembly 108 to measure a respective pressure, flow rate, and/or temperature of gas supplied to the GSM assembly 108.

The GSM assembly 108 includes one or more gas separation modules 118 that separate the received gas flow into a nitrogen-enriched gas flow and an oxygen-enriched gas flow. The oxygen-enriched gas flow is discharged from the GSM assembly 108 through an outlet 120 as waste gas, or alternatively, for use providing breathable air to passenger and/or flight crew compartments (not shown).

In some implementations, one or more pressure sensors 122, one or more flow rate sensors 124, one or more oxygen sensors 126, and/or one or more temperature sensors 128 are operatively connected downstream from an outlet 130 of the GSM assembly 108 to measure a respective pressure, flow rate, oxygen amount, and/or temperature of the nitrogen-enriched gas flow discharged from the GSM assembly 108.

As shown in Figure 1, the inlet 106 of the NEADS 100 is coupled in fluid communication with the outlet 130 of the GSM assembly 108 for receiving a nitrogen-enriched gas flow from the GSM assembly 108 into the supply line 104 of the NEADS 100. In some implementations, the NEADS 100 includes a flow control valve 132 that is operatively connected to (e.g., coupled in fluid communication with) the supply line 104 downstream from the outlet 130 of the GSM assembly 108 to control a flow rate of the nitrogen-enriched gas flow received from the GSM assembly 108 into the supply line 104. In some implementations, the flow control valve 132 is a two-position valve having an open position allowing a first (e.g., higher, etc.) flow rate of the nitrogen-enriched gas to flow downstream from the flow control valve 132, and a closed position allowing a second (e.g., lower, zero, etc.) flow rate of the nitrogen-enriched gas to flow downstream from the flow control valve 132. In other implementations, the flow control valve 132 has a continuum of positions producing any number and/or combination of flow rates of the nitrogen-enriched gas flow downstream from the flow control valve 132.

Some implementations of the NEADS 100 include a ground connection port 134 that is operatively connected to the supply line 104 downstream from the GSM assembly 108, for example: (1) to allow for testing for, and/or drainage of, fuel that has migrated from the fuel tank 102 into the supply line 104; (2) to allow the withdrawal of nitrogen-enriched gas from the nitrogen-enriched gas flow generated by the NEADS 100; (3) for draining the NEADS 100 of nitrogen-enriched gas; and/or (4) for introducing nitrogen-enriched gas from a nitrogen-enriched gas source (not shown) external to the aircraft to the fuel tanks 102 instead of, or in addition to, the nitrogen-enriched gas flow generated by the GSM assembly 108 (e.g., to enable the NEADS 100 to operate without electrical power when supplied with compressed gas from the preconditioned gas-source, etc.).

The supply line 104 of the NEADS 100 includes one or more outlets 136 coupled in fluid communication with the fuel tanks 102 such that the supply line 104 is configured to deliver the nitrogen-enriched gas flow generated by the GSM assembly 108 to the fuel tanks 102 through the one or more outlets 136. In the exemplary implementation, the NEADS 100 serves the center fuel tank 102a and both main wing fuel tanks 102b and 102c of the aircraft. Accordingly, in the exemplary implementation shown in Figure 1, the supply line 104 branches off at a junction 138 into three branches 104a, 104b, and 104c having three outlets 136a, 136b, and 136c that are coupled in fluid communication with the respective fuel tanks 102a, 102b, and 102c. In other implementations, the NEADS 100 serves a different number of fuel tanks 102 (e.g., one of the fuel tanks 102, two of the fuel tanks 102, etc.) such that the supply line 104 includes a different number of branches (e.g., a single branch, two branches, etc.) and a different number of the one or more outlets 136 (e.g., one of the one or more outlets 136, two of the one or more outlets 136, etc.). Each of the outlets 136a, 136b, and 136c may be referred to herein as a "first" and/or a "second" outlet.

Each branch 104a, 104b, and 104c of the supply line 104 includes a respective isolation valve 140a, 140b, and 140c that is operatively connected to (e.g., coupled in fluid communication with) the supply line 104 to control the flow of nitrogen-enriched gas into the respective fuel tank 102a, 102b, and 102c. In some implementations, an isolation valve 140 is a two-position valve having an open position allowing a first (e.g., higher, etc.) flow rate of the nitrogen-enriched gas into the corresponding one of the fuel tanks 102, and a closed position allowing a second (e.g., lower, zero, etc.) flow rate of the nitrogen-enriched gas into the corresponding one of the fuel tanks 102. In some implementations, an isolation valve 140 has a multiplicity of positions producing any number and/or combination of flow rates of the nitrogen-enriched gas flow into the corresponding one of the fuel tanks 102. Optionally, one or more of the branches 104a, 104b, and/or 104c of the supply line 104 includes a check valve 142.

The NEADS 100 includes an over-pressure vent (OPV) system 150. The OPV system 150 is configured to sense the pressure within the fuel tanks 102 and divert nitrogen-enriched gas flow overboard via an OPV valve 152 (described below) that is located within the NEADS 100 upstream of the fuel tank penetration (i.e., the one or more outlets 136). Operation of the OPV system 150 is based on the pressure in the NEADS supply line being related to the pressure within the fuel tanks 102 (e.g., tank pressure + line and component Δp, etc.). For example, a change in flow distribution between the fuel tanks 102 (e.g., due to an isolated, flow restricted, and/or blocked branch, etc.) may result in pressure changes within the NEADS supply line. Accordingly, the OPV system 150 is configured to sense the pressure within the supply line 104 upstream from the one or more outlets 136 and vent pressure from the supply line 104 based on the pressure sensed within the supply line 104 (e.g., when the sensed pressure within the supply line 104 indicates an over-pressurization of the fuel tank 102, etc.).

As briefly described above, the OPV system 150 includes the OPV valve 152. The OPV valve 152 is configured to sense a pressure within the supply line 104 of the NEADS 100 and an atmospheric pressure reference. The pressure difference between the sensed pressure within the supply line 104 and the atmospheric pressure reference is the proxy for the pressure difference (with respect to atmospheric pressure) that is experienced by the fuel tanks 102.

In the exemplary implementation of Figure 1, the OPV valve 152 is a regulating valve that is operatively connected to (e.g., is coupled in fluid communication with) the supply line 104 such that the OPV valve 152 is configured to vent pressure from the supply line 104. The OPV valve 152 is positioned upstream from the one or more outlets 136 of the supply line 104 and downstream from the outlet 130 of the GSM assembly 108. In other words, the OPV valve 152 is coupled in fluid communication with the supply line 104 upstream from the one or more outlets 136 of the supply line 104 and downstream from the outlet 130. Accordingly, the OPV valve 152 is configured to vent pressure of the nitrogen-enriched gas flow discharged from the GSM assembly 108 from the supply line 104 upstream from the one or more outlets 136.

In some implementations, the OPV valve 152 has a dedicated venting location on the aircraft (e.g., a fairing penetration, into an unpressurized compartment of the aircraft, etc.). A dedicated venting location may enable optimization of the venting location to facilitate minimizing the pressure difference between a fuel tank reference ambient and an altitude reference. In some implementations, in addition or alternatively to a dedicated venting location, integrated venting may be used. For example, venting of the OPV valve 152 can be combined with venting of the oxygen-enriched gas flow through the outlet 120. Integrated venting may minimize the number of fairing penetrations of the aircraft. However, due to fluid flow through the integrated outlet in some implementations, pressure in the integrated outlet is higher than ambient and may vary depending on the flow mode, which may impact and add to the tolerances that need to be considered in the valve design.

As described above, the OPV valve 152 is configured to sense an atmospheric pressure reference. In some implementations, the atmospheric pressure reference is sensed via a pneumatic line (not shown) that is coupled in fluid communication between the OPV valve 152 and the atmosphere (e.g., via a fairing penetration, etc.) and/or an unpressurized compartment of the aircraft. In other implementations, sensing of the atmospheric pressure reference is signal-based (mechanical and/or electrical). For example, the OPV system 150 may include a pressure sensor (not shown; e.g., a digital pressure sensor, an analog pressure sensor, etc.) operatively connected to the OPV valve 152 (and/or an optional controller; e.g., the controller 164 described below, etc.). The pressure sensor is configured to read the atmospheric pressure reference such that the OPV valve 152 receives an electrical or optical signal from the pressure sensor that indicates the atmospheric pressure reference.

As is also described above, the OPV valve is configured to sense the pressure within the supply line 104. In the exemplary implementation of Figure 1, the OPV system 150 includes a pressure sense line 154 that is operatively connected between the supply line 104 and the OPV valve 152. The operative connection of the pressure sense line 154 between the OPV valve 152 and the supply line 104 enables the OPV valve 152 to sense the pressure within the supply line 104 through the pressure sense line 154. Specifically, the pressure sense line 154 extends a length from a line end portion 156 to a valve end portion 158. The line end portion 156 is operatively connected to the supply line 104 and the valve end portion 158 is operatively connected to OPV valve 152 such that the OPV valve 152 is configured to sense the pressure within the supply line 104 through the pressure sense line 154.

In some implementations, the pressure sense line 154 provides an electrical and/or mechanical signal. For example, the line end portion 156 of the pressure sense line 154 may include a pressure sensor (not shown; e.g., a digital pressure sensor, an analog pressure sensor, etc.) that is configured to read the pressure within the supply line 104 such that the OPV valve 152 receives an electrical or optical signal from the pressure sense line 154 that indicates the pressure read within the supply line 104. In some implementations, multiple pressure signals may be provided (e.g., which may be appropriate for architectures where the pressure drops are relatively high and where the proxy pressure difference with the sense line closer to the valve, with all tolerance stack ups, would encroach on the normal system operation, which would lead to valve opening in normal, rather than overpressure conditions, etc.).

In the exemplary implementation of Figure 1, the pressure sense line 154 is a pneumatic line. For example, the OPV system 150 the exemplary implementation of the pressure sense line 154 is a pneumatic line that is operatively connected between the supply line 104 and the OPV valve 152. The fluid communication provided by the pressure sense line 154 enables the OPV valve 152 to mechanically sense the pressure within the supply line 104 through the pressure sense line 154. Specifically, the line end portion 156 is coupled in fluid communication with the supply line 104, and the valve end portion 158 is coupled in fluid communication with the OPV valve 152. Accordingly, the pressure sense line 154 provides a fluid path between the supply line 104 (at the location of the line end portion 156) and the OPV valve 152.

As shown in Figure 1, the line end portion 156 of the pressure sense line 154 is operatively connected to the supply line 104 upstream from the one or more outlets 136 of the supply line 104 (and downstream from the OPV valve 152). Accordingly, the OPV valve 152 is configured to sense the pressure within the supply line 104 at a location along the supply line 104 that is upstream from the outlets 136 of the supply line 104 (and downstream from the OPV valve 152). In the exemplary implementation, the line end portion 156 of the pressure sense line 154 is operatively connected to the supply line 104. and thus the OPV valve 152 is configured to sense the pressure within the supply line 104, at a location 160 that is slightly upstream from the junction 138 at which the supply line 104 branches out to the different outlets 136a, 136b, and 136c, as can be seen in Figure 1.

The pressure sense line 154 is not limited to being operatively connected to the supply line 104 at the location 160. Rather, the line end portion 156 of the pressure sense line 154 may be operatively connected to the supply line 104. and thus the OPV valve 152 may be configured to sense the pressure within the supply line 104, at any location along the supply line 104 that is upstream from the one or more outlets 136 of the supply line 104. The location along the supply line 104 at which the OPV valve 152 is configured to sense the pressure within the supply line 104 may be selected to facilitate operation of the OPV system 150. For example, the line end portion 156 of the pressure sense line 154 may be operatively connected to the supply line 104 at a location along the supply line 104 that is as close as possible to the one or more outlets 136 (i.e., the fuel tank penetration location) to minimize a pressure differential that must be accounted for between the fuel tank(s) 102 and the OPV valve 152. Moreover, and for example, the location along the supply line 104 at which the OPV valve 152 is configured to sense the pressure within the supply line 104 may be selected as upstream from, but as close as possible to, a junction (e.g., the junction 138, etc.) at which the supply line 104 branches off to different fuel tanks 102, for example as is shown in the exemplary implementation of Figure 1. Locating the line end portion 156 of the pressure sense line 154 upstream from a junction at which the supply line 104 branches off to different fuel tanks 102 enables the OPV system 150 to serve a NEADS 100 that serves more than one fuel tank 102. For example, locating the line end portion 156 of the pressure sense line 154 upstream from a junction at which the supply line 104 branches off to different ones of the fuel tanks 102 enables the OPV system 150 to detect an overpressure scenario in any and all of the fuel tanks 102 that are served by the NEADS 100. In other implementations, one or more of the branches the NEADS supply line includes a dedicated OPV system 150 downstream from the junction at which the NEADS supply line (e.g., the supply line 104) branches off to different fuel tanks 102. It should be understood that although the OPV system 150 is shown and described herein for use with a NEADS 100 that serves more than one fuel tank 102, the OPV systems disclosed herein are equally applicable to NEADS that serve only a single fuel tank 102. In other words, in some implementations, the OPV system 150 is used to detect overpressure scenarios in only a single fuel tank 102.

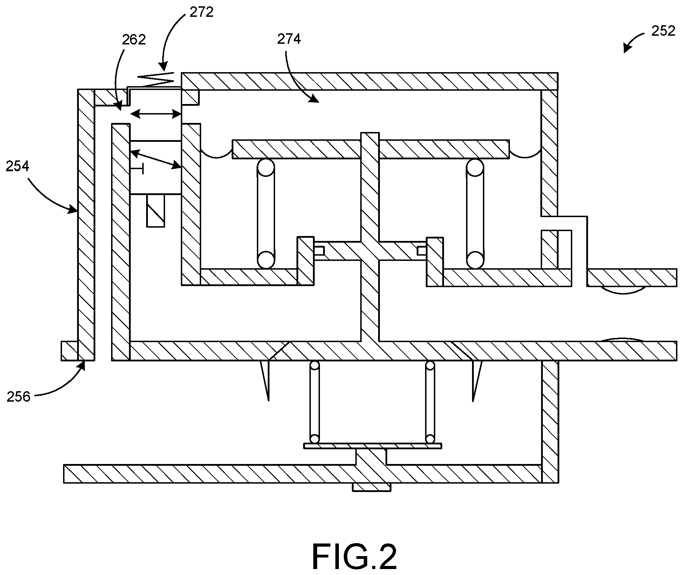

In some other implementations, the OPV valve 152 includes an integrated pressure sense line. For example, Figure 2 illustrates an OPV valve 252 that includes a pneumatic pressure sense line 254 that is integrated into the OPV valve 252. The pneumatic pressure sense line 254 includes a line end portion 256 that is configured to be coupled in fluid communication with the supply line 104 (shown in Figure 1). Accordingly, the pneumatic pressure sense line 254 provides a fluid path between the supply line 104 (at the location of the line end portion 256) and a pressure sense inlet 262 of the OPV valve 252. The fluid communication provided by the integrated pneumatic pressure sense line 254 enables the OPV valve 252 to mechanically sense the pressure within the supply line 104 through the pneumatic pressure sense line 254. In some implementations, the OPV valve 252 includes a pilot valve 272 coupled in fluid communication between an actuation chamber 274 of the OPV valve 252 and the pressure sense inlet 262. The pilot valve 272 can be selectively moved to block the pressure at the pressure sense inlet 262 so that the actuation chamber 274 vents to ambient.

As the pneumatic pressure sense line 254 is integrated into the OPV valve 252 as shown in Figure 2, the line end portion 256 of the pneumatic pressure sense line 254 is operatively connected to the supply line 104 at the location of the OPV valve 252. Accordingly, the OPV valve 252 is configured to sense the pressure within the supply line 104 at the location along the supply line 104 of the OPV valve 252 (which is also upstream from the outlets 136 of the supply line 104). The pneumatic pressure sense line 254 may be suitable for implementations wherein sensing the pressure farther away from the fuel tanks 102 would not interfere with the normal operation of the OPV system 150 (e.g., when there is a sufficiently large difference between the wing allowable and the regulating pressure when all tolerances are accounted for, etc.). In some implementations, because the pressure within the supply line 104 is sensed farther away from the fuel tanks 102, the integrated pneumatic pressure sense line 254 may result in a lower accuracy as compared to a remote pressure sense line (e.g., the pneumatic pressure sense line 154 shown in Figure 1, etc.).

Referring again to Figure 1, in the exemplary implementation, the OPV valve 152 is a pneumatic mechanical valve that provides a direct response to physical phenomenon (e.g., over-pressure, etc.). In other words, no electrical actuation is required to power the regulating action of the OPV valve 152. Rather, an increase in pressure received from the pressure sense line 154 mechanically opens the OPV valve 152. In other implementations, the OPV valve 152 is an electromechanical valve, operation of which is controlled by a controller (e.g., the controller 164 described below, a digital controller, an analog controller, etc.). For example, the controller may receive a signal indicative of the pressure sensed within the supply line 104 and control operation of the OPV valve 152 (e.g., open the OPV valve 152 to vent pressure from the supply line 104, etc.) based on the received signal.

In some implementations (e.g., when the OPV valve 152 is a pneumatic mechanical valve, etc.), the OPV valve 152 includes a spring (not shown in Figure 1) and/or other mechanism, arrangement, and/or the like (e.g., fluid pressure, a magnet, etc.) that is configured as a fail-safe that deactivates the OPV valve 152 such that a loss of power leaves the OPV valve 152 in an active position that enables the OPV valve 152 to regulate pressure and vent the gas flow.

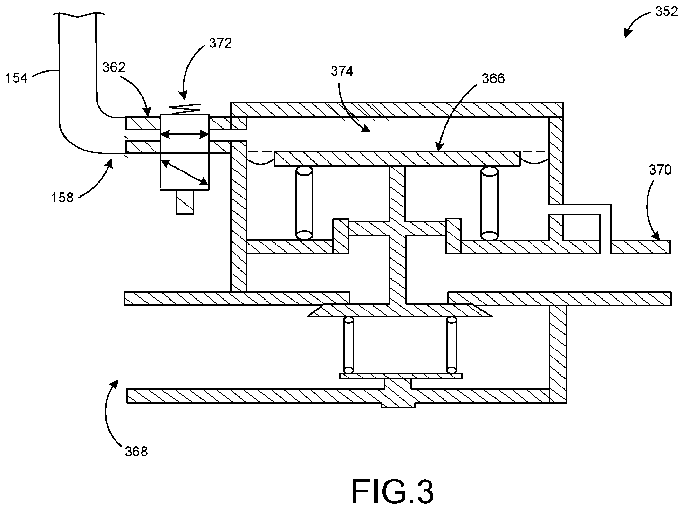

Figure 3 illustrates one example of the exemplary implementation of the OPV valve 152. Specifically, Figure 3 illustrates a pneumatic mechanical OPV valve 352 according to an implementation. The OPV valve 352 includes a single poppet 366. The OPV valve 352 includes a pressure sense inlet 362 that is configured to be coupled in fluid communication with the valve end portion 158 of the pressure sense line 154. The OPV valve 352 also includes a valve inlet 368 at which the OPV valve 352 is configured to be coupled in fluid communication with the supply line 104 (shown in Figure 1) for venting pressure from the supply line 104. The OPV valve 352 is configured to vent pressure of the nitrogen-enriched gas flow from the supply line 104 through a vent outlet 370 of the OPV valve 352. The OPV valve 352 provides a direct response to an over-pressure within the supply line 104 received from the pressure sense line 154. In some implementations, the OPV valve 352 includes a pilot valve 372 coupled in fluid communication between an actuation chamber 374 of the OPV valve 352 and the pressure sense inlet 362. The pilot valve 372 can be selectively moved to block the pressure at the pressure sense inlet 362 so that the actuation chamber 374 vents to ambient.

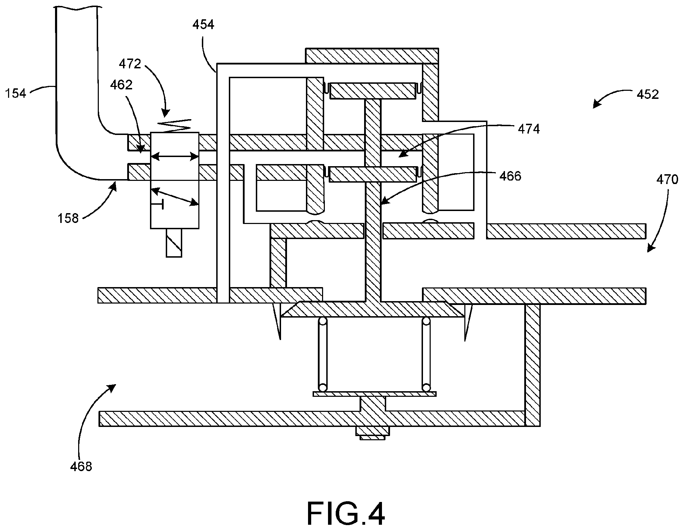

Figure 4 illustrates another example of the exemplary implementation of the OPV valve 152. Specifically, Figure 4 illustrates a pneumatic mechanical OPV valve 452 according to an implementation. The OPV valve 452 includes a dual poppet 466. The dual poppet design of the OPV valve 452 may be used when the OPV system 150 is designed for use with higher flow rates (e.g., higher mass flows may require a larger poppet area, etc.).

The OPV valve 452 includes a pressure sense inlet 462 that is configured to be coupled in fluid communication with the valve end portion 158 of the pressure sense line 154. In addition or alternatively, the OPV valve 452 includes an integrated pressure sense line (e.g., the integrated pressure sense line 454, the integrated pressure sense line 254 shown in Figure 2, etc.). The OPV valve 452 also includes a valve inlet 468 at which the OPV valve 452 is configured to be coupled in fluid communication with the supply line 104 (shown in Figure 1) for venting pressure from the supply line 104. The OPV valve 452 is configured to vent pressure of the nitrogen-enriched gas flow from the supply line 104 through a vent outlet 470 of the OPV valve 452. The OPV valve 452 provides a direct response to an over-pressure within the supply line 104 received from the pressure sense line 154. In some implementations, the OPV valve 452 includes a pilot valve 472 coupled in fluid communication between an actuation chamber 474 of the OPV valve 452 and the pressure sense inlet 462. The pilot valve 472 can be selectively moved to block the pressure at the pressure sense inlet 462 so that the actuation chamber 474 vents to ambient.

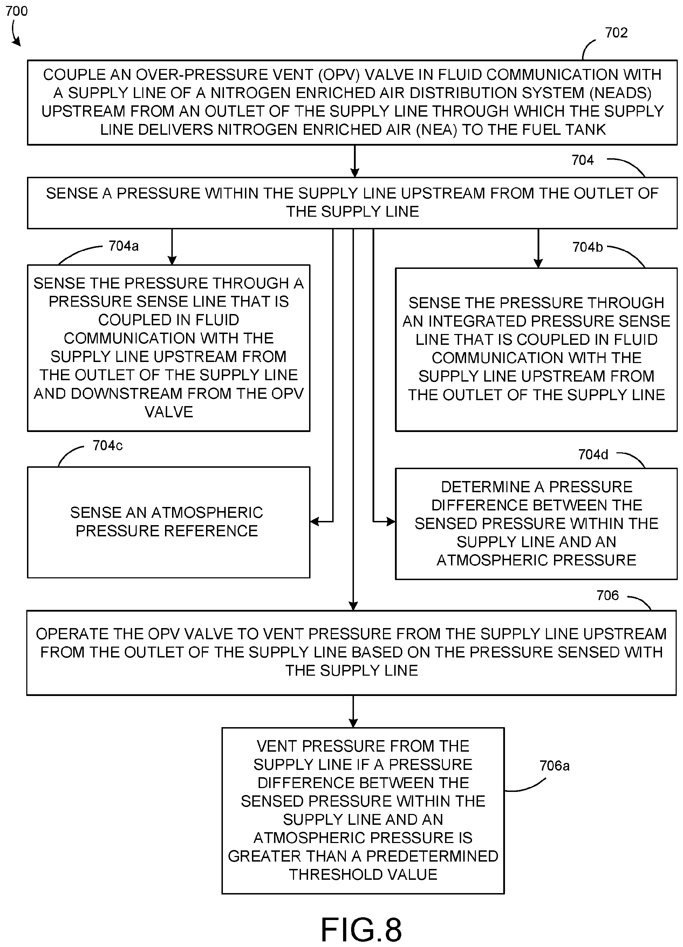

Referring again to Figure 1, and as briefly described above, the OPV system 150 optionally includes a controller 164 that controls one or more operations of the OPV valve 152, any sensors (e.g., signal-based pressure sensors, etc.), and/or other components of the OPV system 150. In some implementations, the controller 164 is configured to execute some or all of the operations of the OPV systems disclosed herein and/or of the methods described herein with respect to Figure 8 (e.g., operations of the OPV valves disclosed herein, built-in-test (BIT) procedures, health monitoring and prognostics of the OPV systems disclosed herein and/or other NEADS components, etc.). The controller 164 represents any device executing instructions (such as, but not limited to, as application programs/software, operating system functionality, functionality partitioned across one or more dedicated LRUs and/or GSEs, and/or the like) to implement the operations and functionality associated with the controller 164. In some implementations, the controller 164 includes a mobile electronic device or any other portable device, for example a mobile telephone, laptop, tablet, computing pad, netbook, and/or the like. In some implementations, the controller 164 includes less portable devices, for example desktop personal computers, servers, controllers, kiosks, tabletop devices, industrial control devices, and/or the like. The controller 164 represents a group of processing units, servers, other computing devices, and/or the like in some implementations. In some implementations, the controller 164 is a dedicated controller for the OPS system 150, while in other implementations a controller (not shown) of the NEADS 100 and/or another aircraft system includes the controller 164 (e.g., the operations performed by the controller 164 are performed by a portion of the controller of the NEADS 100 and/or other aircraft system).

The controller 164 includes one or more optional memories (not shown) and one or more processors (not shown; e.g., microprocessors, etc.) for processing computer executable instructions to control the operation of the controller 164. In some implementations, platform software comprising an operating system and/or any other suitable platform software is provided on the controller 164 to enable application software to be executed on the controller 164. Computer executable instructions are provided using any computer-readable media that are accessible by the controller 164. Computer-readable media include, for example and without limitation, computer storage media and communications media. Computer storage media, such as a memory, include volatile and non-volatile, removable, and non-removable media implemented in any method or technology for storage of information such as computer readable instructions, data structures, program modules or the like. Computer storage media include, but are not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing apparatus. In contrast, communication media embody computer readable instructions, data structures, program modules, and/or the like in a modulated data signal, such as a carrier wave and/or other transport mechanism. As defined herein, computer storage media do not include communication media. Therefore, a computer storage medium should not be interpreted to be a propagating signal per se. Propagated signals per se are not examples of computer storage media.

The OPV system 150 includes mass flow sensors 172 that are coupled in fluid communication with the supply line 104 of the NEADS 100 for sensing a flow rate within the supply line 104. The OPV system 150 includes two mass flow sensors 172a and 172b, with the OPV valve 152 being coupled in fluid communication with the supply line 104 between the mass flow sensors 172a and 172b. However, the OPV system 150 may include any other number (greater than two) of the mass flow sensors 172. Each of the mass flow sensors 172a and 172b may be referred to herein as a "first" and/or a "second" mass flow sensor.

Each mass flow sensor 172 is configured to sense the flow rate within the supply line 104 such that the controller 164 receives an electrical or optical signal from the mass flow sensor 172 that indicates the sensed flow rate within the supply line 104. Each mass flow sensor 172 may be any type of sensor that enables the mass flow sensor to sense the flow rate within the supply line 104 (e.g., with minimal or without flow disturbance, etc.), such as, but not limited to, an electrical sensor, a mechanical sensor, a digital sensor, an analog sensor, and/or the like.

In some implementations, the OPV system 150 includes one or more pressure sensors 174 that is operatively connected to the supply line 104 upstream from the OPV valve 152. The pressure sensor 174 is configured to sense the pressure within the supply line 104 such that the controller 164 receives an electrical or optical signal from the pressure sensor 174 that indicates the sensed pressure within the supply line 104. The pressure sensor 174 may be any type of sensor that enable the pressure sensor to sense the pressure within the supply line 104, such as, but not limited to, an electrical sensor, a mechanical sensor, a digital pressure sensor, an analog pressure sensor, and/or the like. In some implementations wherein the OPV system 150 includes two mass flow sensors 172 (e.g., the exemplary implementation shown in Figure 1, etc.), the pressure sensor 174 is located upstream of the OPV valve 152 and between the two mass flow sensors 172a and 172b, for example as shown in Figure 1.

The mass flow sensor(s) 172 and the pressure sensor 174 may be used, for example, by the controller 164 during a BIT procedure (e.g., as described below, etc.) and/or during health monitoring and prognostics of the OPV system 150 and/or other NEADS components.

In operation, the OPV system 150 is configured to sense the pressure within the fuel tanks 102 relative to atmospheric pressure and divert nitrogen-enriched gas flow overboard via the OPV valve 152 (e.g., in response to the sensed pressure, when desired, when necessary, as required, on-demand, etc.). Specifically, and as described above, operation of the OPV system 150 is based on the pressure in the NEADS supply line being related to the pressure within the fuel tanks 102 (e.g., tank pressure + line and component Δp, etc.). Accordingly, the OPV system 150 is configured to sense the pressure within the supply line 104 upstream from the one or more outlets 136 and vent pressure from the supply line 104 based on the pressure sensed within the supply line 104. For example, a pressure difference between the sensed pressure within the supply line 104 and the sensed atmospheric pressure that is greater than a predetermined threshold is indicative of an over-pressurization of at least one of the fuel tanks 102. Accordingly, the OPV system 150 is configured such that when the pressure difference between the sensed pressure within the supply line 104 and the sensed atmospheric pressure is greater than the predetermined threshold, the OPV valve 152 opens to vent pressure from the supply line 104 and thereby mitigate the over-pressurization situation. In the exemplary implementation, the OPV valve 152 is a pneumatic mechanical valve that is opened automatically by the pressure difference exceeding the predetermined threshold. In other implementations, the OPV valve 152 is opened by the controller 164 upon a determination by the controller 164 or another component of the OPV system 150 that the sensed pressure within the supply line 104 and the sensed atmospheric pressure is greater than the predetermined threshold.

The predetermined threshold of the pressure difference between the sensed pressure within the supply line 104 and the atmospheric pressure, as well as the size (e.g., operational flow rates, etc.) of the OPV valve 152, may be selected (e.g., including a factor of safety, etc.) based on a variety of different factors, such as, but not limited to: a pressure difference between one of the fuel tanks 102 and the atmosphere at which damage or structural failure will occur; an allowable wing structure pressure difference with respect to atmospheric; a maximum climb and/or cruise nitrogen-enriched gas flow when the overpressure threat is most likely; a normal (non-failure) NEADS supply line pressure in climb and/or cruise; and/or the like. In some implementations, the OPV valve 152 is configured to be deactivated (e.g., closed; e.g., by the controller 164, using a pilot valve, another type of pilot device, etc.) during a descent phase of flight, for example to facilitate preventing the OPV valve 152 from being triggered to vent due to the higher NEADS supply line pressures during descent, etc.

The OPV system 150 is thus configured to sense an over-pressurization of the fuel tank(s) 102 and divert nitrogen-enriched gas flow overboard via the OPV valve 152 to facilitate mitigating the over-pressure condition, which may reduce or prevent damage to the aircraft and/or structural failure of one or more components of the aircraft (e.g., a wing, a fuselage, a fuel tank, etc.) caused by an over-pressure situation.

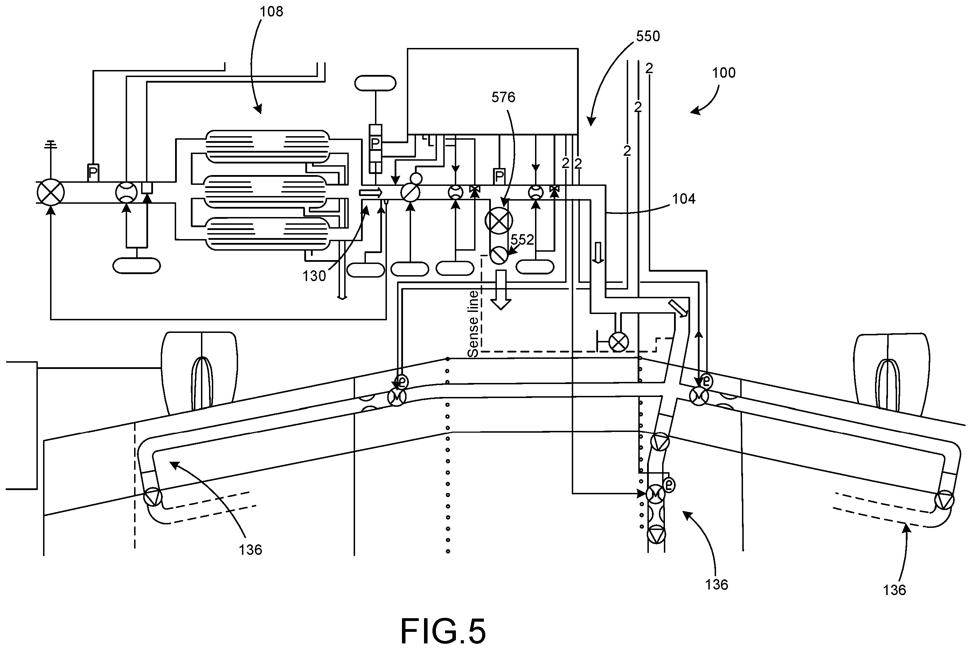

Referring now to Figure 5, an OPV system 550 according to another implementation is illustrated. The OPV system 550 functions substantially similar to the OPV system 150 (shown in Figure 1) to facilitate mitigating over-pressurization of the fuel tanks 102. For example, the OPV system 550 is configured to sense the pressure within the supply line 104 upstream from the one or more outlets 136 and vent pressure from the supply line 104 based on the pressure sensed within the supply line 104 (e.g., when the sensed pressure within the supply line 104 indicates an over-pressurization of the fuel tank 102, etc.).

In the exemplary implementation of Figure 5, the OPV system 550 includes an OPV valve 552 that is a relief valve that is operatively connected to (e.g., is coupled in fluid communication with) the supply line 104 such that the OPV valve 552 is configured to vent pressure from the supply line 104. The OPV valve 552 is positioned upstream from the one or more outlets 136 of the supply line 104 and downstream from the outlet 130 of the GSM assembly 108. In other words, the OPV valve 552 is coupled in fluid communication with the supply line 104 upstream from the one or more outlets 136 of the supply line 104 and downstream from the outlet 130. Accordingly, the OPV valve 152 is configured to vent pressure of the nitrogen-enriched gas flow discharged from the GSM assembly 108 from the supply line 104 upstream from the one or more outlets 136.

In some implementations, the OPV system 550 includes an isolation valve 576 coupled in fluid communication upstream from the OPV valve 552. The isolation valve 576 can be operated to deactivate (e.g., close) the OPV valve 552 during a descent phase of flight, for example to facilitate preventing the OPV valve 552 from being triggered to vent due to the higher NEADS supply line pressures during descent, etc.

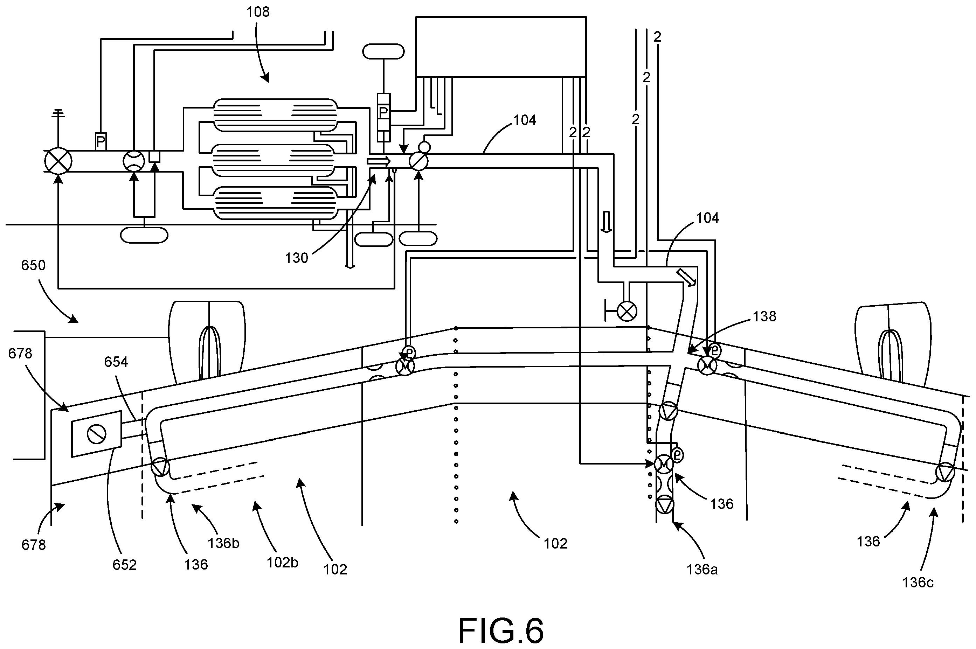

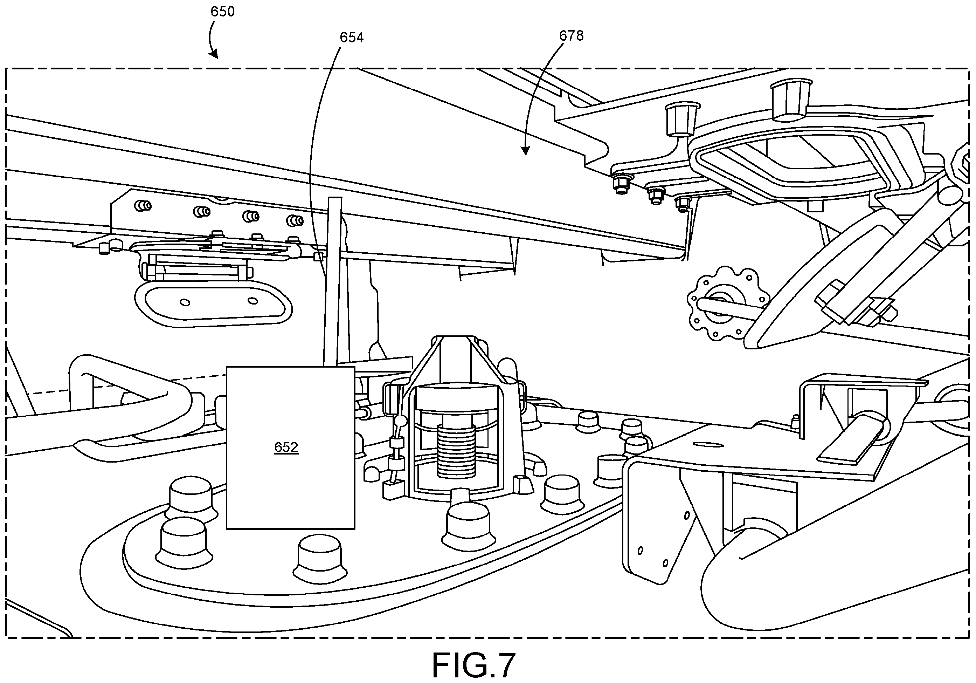

Referring now to Figures 6 and 7, an OPV system 650 according to another implementation is illustrated. The OPV system 650 includes an OPV valve 652 and a fluid connection 654. The OPV valve 652 is positioned within a surge tank 678 of the aircraft that is coupled in fluid communication with the fuel tank 102b (not shown in Figure 7). The fluid connection 654 is operatively connected between the OPV valve 652 and the supply line 104 such that the OPV valve 652 is coupled in fluid communication with the supply line 104 through the fluid connection 654. As shown in Figure 6, the fluid connection 654 is operatively connected to the supply line 104 upstream from the outlet 136b of the supply line 104 (and downstream from the outlet 130 of the GSM assembly 108). Accordingly, the OPV valve 652 is configured to sense the pressure within the supply line 104 at a location along the supply line 104 that is upstream from the outlet 136b of the supply line 104 (and downstream from the outlet 130).

The OPV valve 652 may be a regulating valve, a relief valve, a pneumatic mechanical valve that provides a direct response to physical phenomenon (e.g., over-pressure, etc.), a digital or analog electromechanical valve (operation of which is controlled by a controller, etc.), and/or the like.

The OPV system 650 functions substantially similar to the OPV system 150 (shown in Figure 1) to facilitate mitigating over-pressurization of the fuel tanks 102. For example, the OPV valve 652 is configured such that when the pressure difference between the sensed pressure within the supply line 104 and the sensed atmospheric pressure is greater than the predetermined threshold, the OPV valve 652 opens to vent pressure from the supply line 104 into the surge tank 678 and thereby facilitate mitigating the over-pressurization situation.

Referring again to Figure 1, each OPV valve described and/or illustrated herein (e.g., the OPV valve 152, etc.) may be a regulating valve, a relief valve, a pneumatic mechanical valve that provides a direct response to physical phenomenon (e.g., over-pressure, etc.), a digital or analog electromechanical valve (operation of which is controlled by a controller, etc.), and/or the like. When implemented as a regulating valve, each OPV valve described and/or illustrated herein is not limited to a pressure-loaded closed poppet valve, single or dual. Rather, any other type of regulating valve (e.g., including any valve architecture, etc.) may be used.

BIT can be performed to detect faults within the OPV systems disclosed herein. For example, a BIT can be performed to determine whether the regulating OPV valve 152 has failed open or failed closed. Specifically, the OPV valve 152 is set to the closed position and the isolation valves 140 are closed to prevent the flow of nitrogen-enriched gas to the fuel tanks 102. If there is a mass flow difference between the mass flow sensor 172a and the mass flow sensor 172b when the OPV valve 152 is closed, the OPV valve 152 has failed open. Upon a determination that the OPV valve 152 has failed open, a fault may be latched and a flight deck message sent that the OPV system 150 is in degraded mode. Alternatively, the flammability reduction system (FRS) can be shut down and a corresponding message sent to the flight deck.

If there is no mass flow difference between the mass flow sensors 172a and 172b when the OPV valve 152 should be open during an FRS system BIT, the OPV valve has failed closed. Upon a determination that the OPV valve 152 has failed closed, a fault may be latched and the FRS may be reduced or shut down because the OPV valve 152 venting functionality has failed.

Performance of a BIT to determine whether the OPV valve 552 shown in Figure 5 has failed open or failed closed is substantially similar to the BIT described above with respect to determining whether the regulating OPV valve 152 has failed open or closed, with the exception that the isolation valve 576 would be used to prevent or enable actuation of the OPV valve 552.

In another example, a BIT can be performed to test the regulation ability of the OPV valve 152. First, the isolation valves 140 are closed to prevent the flow of nitrogen-enriched gas to the fuel tanks 102. The flow rate of the nitrogen-enriched gas in the NEADS 100 is gradually increased to further increase NEADS pressure where the OPV valve 152 regulates. Note that this test can incorporate failed open/closed with mass flow comparison without monitoring pressure (similar to the above described open/closed test but with gradual increase of the mass flow). As the flow increases, so does the pressure in a NEADS supply line (e.g., the supply line 104), and when the pressure difference between the NEADS supply line and the ambient pressure at the fairing penetration is sufficiently high, the OPV valve 152 will start opening and regulating pressure. When the OPV valve 152 is regulating, the pressure difference is maintained, which is a distinguishing feature used in the BIT to detect when the OPV valve 152 is regulating and when the OPV valve 152 is unable to regulate. The BIT further includes monitoring the pressure upstream of the OPV valve 152 (e.g., using the pressure sensor 174, etc.) and the pressure difference from the ambient pressure signal (pressure at altitude). Correlation between the flow rate and the start and stop of the regulation abilities are used to fault the OPV valve 152 in the intermediate position. The BIT can use characterization of corrected flow, such as standard flow (corrected flow to 1 atm pressure and 15°C/59°F temperature), or some empirically determined correlation vs Δp because there is temperature measurement (within the mass flow sensor, or can be separate) and a pressure sensor. If the spring rate increases (due to failures), the regulation point will shift up (higher pressure) or the OPV valve 152 will stop regulating at a lower pressure (the slope moves to lower mass flow). The threshold of acceptable range for the maximum flow and drift allowed may be determined by overpressure analysis. Trend analysis can be used to detect drift and anticipate faults.

Note that the pressure at altitude need not be exactly the same as the pressure acting on the OPV valve 152 from the fairing penetration, but would be correlated. Furthermore, what is being looked at during the BIT is not necessarily the absolute difference, but the change in slope; both the absolute difference and the change of slope can be used in prognostics and health monitoring to recognize when the OPV valve 152 may be exhibiting wear.

Performance of a BIT to determine the regulation ability of the relief OPV valve 552 shown in Figure 5 is substantially similar to the BIT described above with respect to determining the regulating ability of the OPV valve 152, with the exception that instead of monitoring the pressure difference, the flow through the OPV valve 552 can be inferred by the difference in the two mass flow sensors 172a and 172b and a correlation (corrected flow, such as standard flow correction to 1 atm and 15°C, or an empirical function vs. Δp) can be made with the pressure difference between the pressure sensor (between the mass flow sensors) and the pressure at altitude signal.

In implementations wherein the OPV system 150 only includes one mass flow sensor 172, BITs may be performed using one or more threshold flow rates instead of the difference between the flow rates of different mass flow sensors.

Figure 8 illustrates a method 700 of venting pressure from a NEADS (e.g., the NEADS 100 shown in Figures 1 and 5, etc.) of a fuel tank (e.g., the fuel tanks 102a, 102b, and 102c shown in Figure 1, etc.) according to an implementation. The method 700 includes coupling, at 702, an OPV valve in fluid communication with a supply line of the NEADS upstream from an outlet of the supply line through which the supply line delivers NEA to the fuel tank. At 704, the method 700 includes sensing a pressure within the supply line upstream from the outlet of the supply line. At 706, the method 700 includes operating the OPV valve to vent pressure from the supply line upstream from the outlet of the supply line based on the pressure sensed within the supply line.

In some implementations, sensing at 704 the pressure within the supply line upstream from the outlet of the supply line includes sensing, at 704a, the pressure through a pressure sense line that is coupled in fluid communication with the supply line upstream from the outlet of the supply line and downstream from OPV valve. In some implementations, sensing at 704 the pressure within the supply line upstream from the outlet of the supply line optionally includes sensing, at 704b, the pressure through an integrated pressure sense line that is coupled in fluid communication with the supply line upstream from the outlet of the supply line.

Optionally, sensing at 704 the pressure within the supply line upstream from the outlet of the supply line includes sensing, at 704c, an atmospheric pressure reference. In some implementations, sensing at 704 the pressure within the supply line upstream from the outlet of the supply line includes determining, at 704d, a pressure difference between the sensed pressure within the supply line and an atmospheric pressure.

In some implementations, operating at 706 the OPV valve to vent pressure from the supply line upstream from the outlet of the supply line based on the pressure sensed within the supply line includes venting, at 706a, pressure from the supply line if a pressure difference between the sensed pressure within the supply line and an atmospheric pressure is greater than a predetermined threshold value.

Referring now to Figure 9, examples of the present application may be described in the context of using the OPV systems disclosed herein on an aircraft 800 that includes an airframe 802. The aircraft 800 includes a plurality of high-level systems 804 and an interior 806. Examples of high-level systems 804 include one or more of a propulsion system 808, an electrical system 810, a hydraulic fluid system 812, a control system 814, and an environmental system 816. Any number of other systems can be included. Although a fixed wing passenger aircraft is shown, the OPV systems described and/or illustrated herein can be used with any other type of aircraft, such as, but not limited to, transport aircraft, military aircraft, rotorcraft (e.g., helicopters, etc.), lighter than air vehicles (e.g., balloons, etc.), and/or the like. Moreover, although an aerospace example is shown, the present application can be applied to other industries, such as, but not limited to, the automotive industry, the marine industry, etc.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

Any range or value given herein can be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above can relate to one implementation or can relate to several implementations. The implementations are not limited to those that solve any or all of the stated problems or those that have any or all of the stated benefits and advantages. It will further be understood that reference to 'an' item refers to one or more of those items.

The order of execution or performance of the operations in examples of the present application illustrated and described herein is not essential, unless otherwise specified. That is, the operations can be performed in any order, unless otherwise specified, and examples of the application can include additional or fewer operations than those disclosed herein. For example, it is contemplated that executing or performing a particular operation before, contemporaneously with, or after another operation (e.g., different steps, etc.) is within the scope of aspects and implementations of the application.

The term "comprising" is used in this specification to mean including the feature(s) or act(s) followed thereafter, without excluding the presence of one or more additional features or acts. The terms "comprising," "including," and "having" are intended to be inclusive and mean that there can be additional elements other than the listed elements. In other words, the use of "including," "comprising," "having," "containing," "involving," and variations thereof, is meant to encompass the items listed thereafter and additional items. Accordingly, and for example, unless explicitly stated to the contrary, implementations "comprising" or "having" an element or a plurality of elements having a particular property can include additional elements not having that property. Further, references to "one implementation" or "an implementation" are not intended to be interpreted as excluding the existence of additional implementations that also incorporate the recited features. The term "exemplary" is intended to mean "an example of".

When introducing elements of aspects of the application or the examples thereof, the articles "a," "an," "the," and "said" are intended to mean that there are one or more of the elements. In other words, the indefinite articles "a", "an", "the", and "said" as used in the specification and in the claims, unless clearly indicated to the contrary, should be understood to mean "at least one." Accordingly, and for example, as used herein, an element or step recited in the singular and preceded by the word "a" or "an" should be understood as not necessarily excluding the plural of the elements or steps.

The phrase "one or more of the following: A, B, and C" means "at least one of A and/or at least one of B and/or at least one of C." The phrase "and/or", as used in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one implementation, to A only (optionally including elements other than B); in another implementation, to B only (optionally including elements other than A); in yet another implementation, to both A and B (optionally including other elements); etc.

As used in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of or "exactly one of," or, when used in the claims, "consisting of," will refer to the inclusion of exactly one element of a number or list of elements. In general, the term "or" as used shall only be interpreted as indicating exclusive alternatives (i.e. "one or the other but not both") when preceded by terms of exclusivity, such as "either," "one of "only one of or "exactly one of." "Consisting essentially of," when used in the claims, shall have its ordinary meaning as used in the field of patent law.

As used in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one implementation, to at least one, optionally including more than one, A, with no B present (and optionally including elements other than B); in another implementation, to at least one, optionally including more than one, B, with no A present (and optionally including elements other than A); in yet another implementation, to at least one, optionally including more than one, A, and at least one, optionally including more than one, B (and optionally including other elements); etc.

Use of ordinal terms such as "first," "second," "third," etc., in the claims to modify a claim element does not by itself connote any priority, precedence, or order of one claim element over another or the temporal order in which acts of a method are performed. Ordinal terms are used merely as labels to distinguish one claim element having a certain name from another element having a same name (but for use of the ordinal term), to distinguish the claim elements.

Having described aspects of the application in detail, it will be apparent that modifications and variations are possible without departing from the scope of aspects of the application as defined in the appended claims. As various changes could be made in the above constructions, products, and methods without departing from the scope of aspects of the application, it is intended that all matter contained in the above description and shown in the accompanying drawings shall be interpreted as illustrative and not in a limiting sense.

It is to be understood that the above description is intended to be illustrative, and not restrictive. For example, the above-described implementations (and/or aspects thereof) can be used in combination with each other. In addition, many modifications can be made to adapt a particular situation or material to the teachings of the various implementations of the application without departing from their scope. While the dimensions and types of materials described herein are intended to define the parameters of the various implementations of the application, the implementations are by no means limiting and are example implementations. Many other implementations will be apparent to those of ordinary skill in the art upon reviewing the above description. The scope of the various implementations of the application should, therefore, be determined with reference to the appended claims. In the appended claims, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description uses examples to disclose the various implementations of the application, including the best mode, and also to enable any person of ordinary skill in the art to practice the various implementations of the application, including making and using any devices or systems and performing any incorporated methods. The patentable scope of the various implementations of the application is defined by the claims.

## Claims

1. A nitrogen enriched air distribution system 'NEADS' (100) comprising:
a supply line (104) comprising an outlet (136) configured to be coupled in fluid communication with a fuel tank (102), the supply line (104) being configured to deliver nitrogen enriched gas to the fuel tank (102) through the outlet (136); and
an over-pressure vent 'OPV' system (150) comprising:
an OPV valve (152) coupled in fluid communication with the supply line (104) upstream from the outlet (136) such that the OPV valve (152) is configured to vent pressure from the supply line (104), the OPV valve (152) being configured to sense a pressure within the supply line (104) upstream from the outlet (136) of the supply line (104);
a first mass flow sensor (172a) coupled in fluid communication with the supply line (104) for sensing a flow rate within the supply line (104); and
a second mass flow sensor (172b) coupled in fluid communication with the supply line (104) for sensing a flow rate within the supply line (104),
wherein the OPV valve is coupled in fluid communication with the supply line (104) between the first mass flow sensor (172a) and the second mass flow sensor (172b).

2. The NEADS (100) of claim 1, wherein the OPV valve (152) comprises a regulating valve.

3. The NEADS (100) of claim 1 or claim 2, wherein the OPV valve (152) comprises a relief valve (152, 552, 652).

4. The NEADS (100) of any preceding claim, wherein the OPV valve (152) comprises a relief valve (152, 552, 652), the OPV system (150) further comprising an isolation valve (576) configured to be coupled in fluid communication with the supply line (104) of the NEADS (100) upstream from the OPV valve (152).

5. The NEADS (100) of any preceding claim, wherein the OPV valve (152) comprises a dual poppet valve (466).

6. The NEADS (100) of any preceding claim, further comprising a pressure sense line configured to be coupled in fluid communication with the supply line of the NEADS upstream from the outlet of the supply line and downstream from OPV valve, the pressure sense line being coupled in fluid communication with the OPV valve such that the OPV valve is configured to sense the pressure within the supply line through the pressure sense line.

7. The NEADS (100) of any preceding claim, wherein the OPV valve (152) comprises an integrated pressure sense line (154) that is configured to be coupled in fluid communication with the supply line (104) of the NEADS (100) upstream from the outlet (136) of the supply line (104), the OPV valve (152) being configured to sense the pressure within the supply line (104) through the integrated pressure sense line (154).

8. The NEADS (100) of any preceding claim, wherein the outlet (136) of the supply line (104) is a first outlet (136a, 136b, 136c) of the supply line (104), and wherein the supply line (104) further comprises a second outlet (136a, 136b, 136c), and wherein the OPV valve (152) is coupled in fluid communication with the supply line (104) of the NEADS (100) upstream from a junction (138) at which the supply line (104) branches off to the first outlet (136a, 136b, 136c) and the second outlet (136a, 136b, 136c) of the supply line (100).

9. The NEADS (100) of any preceding claim, further comprising a controller (164) configured to determine whether the OPV valve (152) has failed open or closed by determining a mass flow difference between the first mass flow sensor (172a) and the second mass flow sensor (172b).

10. A method (700) of venting pressure from a nitrogen enriched air distribution system 'NEADS' of a fuel tank, the method (700) comprising:
coupling (702) an over-pressure vent 'OPV' valve in fluid communication with a supply line of the NEADS upstream from an outlet of the supply line through which the supply line delivers nitrogen enriched gas to the fuel tank;
sensing (704) a pressure within the supply line upstream from the outlet of the supply line; and
operating (706) the OPV valve to vent pressure from the supply line upstream from the outlet of the supply line based on the pressure sensed within the supply line,
the method further comprising:
coupling a first mass flow sensor (172a) and a second mass flow sensor (172b) in fluid communication with the supply line (104), and wherein:
the OPV valve is coupled in fluid communication with the supply line (104) between the first and second mass flow sensors (172a, 172b); and
each of the first and second mass flow sensors (172a, 172b) is configured to sense a flow rate within the supply line (104).

11. The method (700) of claim 10, wherein sensing (704) the pressure within the supply line upstream from the outlet of the supply line comprises sensing (704c) an atmospheric pressure reference.

12. The method (700) of claim 10 or 11, wherein sensing (704) the pressure within the supply line upstream from the outlet of the supply line comprises determining (704d) pressure difference between the sensed pressure within the supply line and an or the atmospheric pressure.

13. The method (700) of any of claims 10 to 12, wherein operating (706) the OPV valve to vent pressure from the supply line upstream from the outlet of the supply line based on the pressure sensed within the supply line comprises venting (706a) pressure from the supply line if a or the pressure difference between the sensed pressure within the supply line and an or the atmospheric pressure is greater than a predetermined threshold value.

14. The method (700) of any of claims 10 to 13, wherein:
sensing the pressure within the supply line upstream from the outlet of the supply line comprises sensing the pressure through a pressure sense line that is coupled in fluid communication with the supply line upstream from the outlet of the supply line and downstream from the OPV valve, the pressure sense line being coupled in fluid communication with the OPV valve such that the OPV valve is configured to sense the pressure within the supply line through the pressure sense line; or
sensing the pressure within the supply line upstream from the outlet of the supply line comprises sensing the pressure through an integrated pressure sense line that is coupled in fluid communication with the supply line upstream from the outlet of the supply line, the OPV valve (152) being configured to sense the pressure within the supply line (104) through the integrated pressure sense line (154).

15. The method (700) of any of claims 11 to 14, comprising determining whether the OPV valve (152) has failed open or closed by determining a mass flow difference between the first mass flow sensor (172a) and the second mass flow sensor (172b).

## Patentansprüche

1. Stickstoffangereichertes Luftverteilungssystem (NEADS) (100), umfassend:
eine Versorgungsleitung (104), die einen Auslass (136) umfasst, der dazu ausgelegt ist, in Fluidverbindung mit einem Kraftstofftank (102) gekoppelt zu werden, wobei die Versorgungsleitung (104) dazu ausgelegt ist, stickstoffangereichertes Gas durch den Auslass (136) an den Kraftstofftank (102) zu liefern; und
ein Überdruckentlüftungssystem (OPV-System) (150), das Folgendes umfasst:
ein OPV-Ventil (152), das in Fluidverbindung mit der Versorgungsleitung (104) stromaufwärts des Auslasses (136) gekoppelt ist, so dass das OPV-Ventil (152) dazu ausgelegt ist, Druck aus der Versorgungsleitung (104) abzulassen, wobei das OPV-Ventil (152) dazu ausgelegt ist, einen Druck innerhalb der Versorgungsleitung (104) stromaufwärts des Auslasses (136) der Versorgungsleitung (104) zu erfassen;
einen ersten Massendurchflusssensor (172a), der in Fluidverbindung mit der Versorgungsleitung (104) gekoppelt ist, um eine Durchflussrate innerhalb der Versorgungsleitung (104) zu erfassen; und
einen zweiten Massendurchflusssensor (172b), der in Fluidverbindung mit der Versorgungsleitung (104) gekoppelt ist, um eine Durchflussrate innerhalb der Versorgungsleitung (104) zu erfassen,
wobei das OPV-Ventil in Fluidverbindung mit der Versorgungsleitung (104) zwischen dem ersten Massendurchflusssensor (172a) und dem zweiten Massendurchflusssensor (172b) gekoppelt ist.

2. NEADS (100) nach Anspruch 1, wobei das OPV-Ventil (152) ein Regelventil umfasst.

3. NEADS (100) nach Anspruch 1 oder Anspruch 2, wobei das OPV-Ventil (152) ein Entlastungsventil (152, 552, 652) umfasst.

4. NEADS (100) nach einem der vorhergehenden Ansprüche, wobei das OPV-Ventil (152) ein Entlastungsventil (152, 552, 652) umfasst, wobei das OPV-System (150) ferner ein Absperrventil (576) umfasst, das dazu ausgelegt ist, in Fluidverbindung mit der Versorgungsleitung (104) des NEADS (100) stromaufwärts des OPV-Ventils (152) gekoppelt zu werden.

5. NEADS (100) nach einem der vorhergehenden Ansprüche, wobei das OPV-Ventil (152) ein Doppel-Sitzventil (466) umfasst.

6. NEADS (100) nach einem der vorhergehenden Ansprüche, ferner umfassend eine Druckerfassungsleitung, die dazu ausgelegt ist, in Fluidverbindung mit der Versorgungsleitung des NEADS stromaufwärts des Auslasses der Versorgungsleitung und stromabwärts des OPV-Ventils gekoppelt zu werden, wobei die Druckerfassungsleitung in Fluidverbindung mit dem OPV-Ventil gekoppelt ist, so dass das OPV-Ventil dazu ausgelegt ist, den Druck innerhalb der Versorgungsleitung durch die Druckerfassungsleitung zu erfassen.

7. NEADS (100) nach einem der vorhergehenden Ansprüche, wobei das OPV-Ventil (152) eine integrierte Druckerfassungsleitung (154) umfasst, die dazu ausgelegt ist, in Fluidverbindung mit der Versorgungsleitung (104) des NEADS (100) stromaufwärts des Auslasses (136) der Versorgungsleitung (104) gekoppelt zu werden, wobei das OPV-Ventil (152) dazu ausgelegt ist, den Druck innerhalb der Versorgungsleitung (104) durch die integrierte Druckerfassungsleitung (154) zu erfassen.

8. NEADS (100) nach einem der vorhergehenden Ansprüche, wobei der Auslass (136) der Versorgungsleitung (104) ein erster Auslass (136a, 136b, 136c) der Versorgungsleitung (104) ist und wobei die Versorgungsleitung (104) ferner einen zweiten Auslass (136a, 136b, 136c) umfasst und wobei das OPV-Ventil (152) in Fluidverbindung mit der Versorgungsleitung (104) des NEADS (100) stromaufwärts eines Übergangs (138), an dem die Versorgungsleitung (104) zu dem ersten Auslass (136a, 136b, 136c) und dem zweiten Auslass (136a, 136b, 136c) der Versorgungsleitung (100) abzweigt, gekoppelt ist.

9. NEADS (100) nach einem der vorhergehenden Ansprüche, ferner umfassend eine Steuereinheit (164), die dazu ausgelegt ist, zu bestimmen, ob das OPV-Ventil (152) durch Bestimmen einer Massendurchflussdifferenz zwischen dem ersten Massendurchflusssensor (172a) und dem zweiten Massendurchflusssensor (172b) geöffnet oder geschlossen ausgefallen ist.

10. Verfahren (700) zum Entlüften von Druck aus einem stickstoffangereicherten Luftverteilungssystem (NEADS) eines Kraftstofftanks, wobei das Verfahren (700) Folgendes umfasst:
Koppeln (702) eines Überdruckentlüftungsventils (OPV-Ventils) in Fluidverbindung mit einer Versorgungsleitung des NEADS stromaufwärts eines Auslasses der Versorgungsleitung, durch die die Versorgungsleitung stickstoffangereichertes Gas zum Kraftstofftank liefert; Erfassen (704) eines Drucks innerhalb der Versorgungsleitung stromaufwärts des Auslasses der Versorgungsleitung; und
Betreiben (706) des OPV-Ventils, um Druck aus der Versorgungsleitung stromaufwärts des Auslasses der Versorgungsleitung basierend auf dem in der Versorgungsleitung erfassten Druck abzulassen,
wobei das Verfahren ferner Folgendes umfasst:
Koppeln eines ersten Massendurchflusssensors (172a) und eines zweiten Massendurchflusssensors (172b) in Fluidverbindung mit der Versorgungsleitung (104), und
wobei:
das OPV-Ventil in Fluidverbindung mit der Versorgungsleitung (104) zwischen dem ersten und dem zweiten Massendurchflusssensor (172a, 172b) gekoppelt ist; und
sowohl der erste als auch der zweite Massendurchflusssensor (172a, 172b) dazu ausgelegt sind, eine Durchflussrate innerhalb der Versorgungsleitung (104) zu erfassen.

11. Verfahren (700) nach Anspruch 10, wobei das Erfassen (704) des Drucks innerhalb der Versorgungsleitung stromaufwärts des Auslasses der Versorgungsleitung das Erfassen (704c) einer Atmosphärendruckreferenz umfasst.

12. Verfahren (700) nach Anspruch 10 oder 11, wobei das Erfassen (704) des Drucks innerhalb der Versorgungsleitung stromaufwärts des Auslasses der Versorgungsleitung das Bestimmen (704d) einer Druckdifferenz zwischen dem erfassten Druck innerhalb der Versorgungsleitung und einem oder dem Atmosphärendruck umfasst.

13. Verfahren (700) nach einem der Ansprüche 10 bis 12, wobei das Betreiben (706) des OPV-Ventils zum Entlüften von Druck aus der Versorgungsleitung stromaufwärts des Auslasses der Versorgungsleitung basierend auf dem in der Versorgungsleitung erfassten Druck ein Entlüften (706a) von Druck aus der Versorgungsleitung umfasst, wenn eine oder die Druckdifferenz zwischen dem erfassten Druck in der Versorgungsleitung und einem oder dem Atmosphärendruck größer als ein vorbestimmter Schwellenwert ist.

14. Verfahren (700) nach einem der Ansprüche 10 bis 13, wobei:
das Erfassen des Drucks innerhalb der Versorgungsleitung stromaufwärts des Auslasses der Versorgungsleitung das Erfassen des Drucks durch eine Druckerfassungsleitung umfasst, die stromaufwärts des Auslasses der Versorgungsleitung und stromabwärts des OPV-Ventils in Fluidverbindung mit der Versorgungsleitung gekoppelt ist, wobei die Druckerfassungsleitung in Fluidverbindung mit dem OPV-Ventil gekoppelt ist, so dass das OPV-Ventil dazu ausgelegt ist, den Druck innerhalb der Versorgungsleitung durch die Druckerfassungsleitung zu erfassen; oder
das Erfassen des Drucks in der Versorgungsleitung stromaufwärts des Auslasses der Versorgungsleitung das Erfassen des Drucks durch eine integrierte Druckerfassungsleitung umfasst, die stromaufwärts des Auslasses der Versorgungsleitung mit der Versorgungsleitung in Fluidverbindung gekoppelt ist, wobei das OPV-Ventil (152) dazu ausgelegt ist, den Druck in der Versorgungsleitung (104) durch die integrierte Druckerfassungsleitung (154) zu erfassen.

15. Verfahren (700) nach einem der Ansprüche 11 bis 14, umfassend das Bestimmen, ob das OPV-Ventil (152) geöffnet oder geschlossen ausgefallen ist, durch Bestimmen einer Massendurchflussdifferenz zwischen dem ersten Massendurchflusssensor (172a) und dem zweiten Massendurchflusssensor (172b).

## Revendications

1. Système de distribution d'air enrichi en azote, dit NEADS, (100) comprenant :
une conduite d'alimentation (104) comprenant une sortie (136) configurée pour être couplée en communication fluidique avec un réservoir de carburant (102), la conduite d'alimentation (104) étant configurée pour délivrer du gaz enrichi en azote au réservoir de carburant (102) via la sortie (136) ; et
un système d'évacuation de surpression, dite OPV, (150) comprenant :
une vanne OPV (152) couplée en communication fluidique avec la conduite d'alimentation (104) en amont de la sortie (136) de sorte que la vanne OPV (152) est configurée pour évacuer la pression de la conduite d'alimentation (104), la vanne OPV (152) étant configurée pour détecter une pression au sein de la conduite d'alimentation (104) en amont de la sortie (136) de la conduite d'alimentation (104) ;
un premier capteur de débit massique (172a) couplé en communication fluidique avec la conduite d'alimentation (104) pour détecter un débit au sein de la conduite d'alimentation (104) ; et
un deuxième capteur de débit massique (172b) couplé en communication fluidique avec la conduite d'alimentation (104) pour détecter un débit au sein de la conduite d'alimentation (104),
dans lequel la vanne OPV est couplée en communication fluidique avec la conduite d'alimentation (104) entre le premier capteur de débit massique (172a) et le deuxième capteur de débit massique (172b).

2. NEADS (100) selon la revendication 1, dans lequel la vanne OPV (152) comprend une vanne de régulation.

3. NEADS (100) selon la revendication 1 ou la revendication 2, dans lequel la vanne OPV (152) comprend une vanne de décharge (152, 552, 652).

4. NEADS (100) selon l'une quelconque des revendications précédentes, dans lequel la vanne OPV (152) comprend une vanne de décharge (152, 552, 652), le système OPV (150) comprenant en outre une vanne d'isolement (576) configurée pour être couplée en communication fluidique avec la conduite d'alimentation (104) du NEADS (100) en amont de la vanne OPV (152).

5. NEADS (100) selon l'une quelconque des revendications précédentes, dans lequel la vanne OPV (152) comprend une vanne à double champignon (466).

6. NEADS (100) selon l'une quelconque des revendications précédentes, comprenant en outre une conduite de détection de pression configurée pour être couplée en communication fluidique avec la conduite d'alimentation du NEADS en amont de la sortie de la conduite d'alimentation et en aval de la vanne OPV, la conduite de détection de pression étant couplée en communication fluidique avec la vanne OPV de sorte que la vanne OPV est configurée pour détecter la pression au sein de la conduite d'alimentation via la conduite de détection de pression.

7. NEADS (100) selon l'une quelconque des revendications précédentes, dans lequel la vanne OPV (152) comprend une conduite de détection de pression intégrée (154) qui est configurée pour être couplée en communication fluidique avec la conduite d'alimentation (104) du NEADS (100) en amont de la sortie (136) de la conduite d'alimentation (104), la vanne OPV (152) étant configurée pour détecter la pression au sein de la conduite d'alimentation (104) via la conduite de détection de pression intégrée (154).

8. NEADS (100) selon l'une quelconque des revendications précédentes, dans lequel la sortie (136) de la conduite d'alimentation (104) est une première sortie (136a, 136b, 136c) de la conduite d'alimentation (104), et dans lequel la conduite d'alimentation (104) comprend en outre une deuxième sortie (136a, 136b, 136c), et dans lequel la vanne OPV (152) est couplée en communication fluidique avec la conduite d'alimentation (104) du NEADS (100) en amont d'une jonction (138) au niveau de laquelle la conduite d'alimentation (104) bifurque vers la première sortie (136a, 136b, 136c) et la deuxième sortie (136a, 136b, 136c) de la conduite d'alimentation (100).

9. NEADS (100) selon l'une quelconque des revendications précédentes, comprenant en outre un contrôleur (164) configuré pour déterminer si la vanne OPV (152) est restée bloquée en position ouverte ou fermée en déterminant une différence de débit massique entre le premier capteur de débit massique (172a) et le deuxième capteur de débit massique (172b).

10. Procédé (700) d'évacuation de pression d'un système de distribution d'air enrichi en azote, dit NEADS, d'un réservoir de carburant, le procédé (700) comprenant :
le couplage (702) d'une vanne d'évacuation de surpression, dite OPV, en communication fluidique avec une conduite d'alimentation du NEADS en amont d'une sortie de la conduite d'alimentation via laquelle la conduite d'alimentation délivre du gaz enrichi en azote au réservoir de carburant ;
la détection (704) d'une pression au sein de la conduite d'alimentation en amont de la sortie de la conduite d'alimentation ; et
l'actionnement (706) de la vanne OPV pour évacuer la pression de la conduite d'alimentation en amont de la sortie de la conduite d'alimentation en fonction de la pression détectée au sein de la conduite d'alimentation, le procédé comprenant en outre :
le couplage d'un premier capteur de débit massique (172a) et d'un deuxième capteur de débit massique (172b) en communication fluidique avec la conduite d'alimentation (104), et dans lequel :
la vanne OPV est couplée en communication fluidique avec la conduite d'alimentation (104) entre les premier et deuxième capteurs de débit massique (172a, 172b) ; et
chacun des premier et deuxième capteurs de débit massique (172a, 172b) est configuré pour détecter un débit au sein de la conduite d'alimentation (104).

11. Procédé (700) selon la revendication 10, dans lequel la détection (704) de la pression au sein de la conduite d'alimentation en amont de la sortie de la conduite d'alimentation comprend la détection (704c) d'une référence de pression atmosphérique.

12. Procédé (700) selon la revendication 10 ou 11, dans lequel la détection (704) de la pression au sein de la conduite d'alimentation en amont de la sortie de la conduite d'alimentation comprend la détermination (704d) d'une différence de pression entre la pression détectée au sein de la conduite d'alimentation et une ou la pression atmosphérique.

13. Procédé (700) selon l'une quelconque des revendications 10 à 12, dans lequel l'actionnement (706) de la vanne OPV pour évacuer la pression de la conduite d'alimentation en amont de la sortie de la conduite d'alimentation en fonction de la pression détectée au sein de la conduite d'alimentation comprend l'évacuation (706a) de la pression de la conduite d'alimentation si une ou la différence de pression entre la pression détectée au sein de la conduite d'alimentation et une ou la pression atmosphérique est supérieure à une valeur seuil prédéterminée.

14. Procédé (700) selon l'une quelconque des revendications 10 à 13, dans lequel :
la détection de la pression au sein de la conduite d'alimentation en amont de la sortie de la conduite d'alimentation comprend la détection de la pression via une conduite de détection de pression qui est couplée en communication fluidique avec la conduite d'alimentation en amont de la sortie de la conduite d'alimentation et en aval de la vanne OPV, la conduite de détection de pression étant couplée en communication fluidique avec la vanne OPV de sorte que la vanne OPV est configurée pour détecter la pression au sein de la conduite d'alimentation via la conduite de détection de pression ; ou
la détection de la pression au sein de la conduite d'alimentation en amont de la sortie de la conduite d'alimentation comprend la détection de la pression via une conduite de détection de pression intégrée qui est couplée en communication fluidique avec la conduite d'alimentation en amont de la sortie de la conduite d'alimentation, la vanne OPV (152) étant configurée pour détecter la pression au sein de la conduite d'alimentation (104) via la conduite de détection de pression intégrée (154).

15. Procédé (700) selon l'une quelconque des revendications 11 à 14, comprenant la détermination si la vanne OPV (152) est restée bloquée en position ouverte ou fermée par détermination d'une différence de débit massique entre le premier capteur de débit massique (172a) et le deuxième capteur de débit massique (172b).
